# EUROPÄISCHE PATENTSCHRIFT

(11) **EP 1 476 928 B1**
(45) Veröffentlichungstag und Bekanntmachung des Hinweises auf die Patenterteilung: **25.01.2006**
(21) Anmeldenummer: 03700297.9
(22) Anmeldetag: 29.01.2003
(51) Int. Cl.: H02G 15/068, H02G 15/184

(54) **HÜLLKÖRPER FÜR EIN HOCHSPANNUNGSKABEL UND KABELELEMENT, WELCHES MIT EINEM SOLCHEN HÜLLKÖRPER VERSEHEN IST**
SLEEVE FOR A HIGH-VOLTAGE CABLE AND CABLE ELEMENT PROVIDED WITH A SLEEVE OF THIS TYPE
ENVELOPPE POUR CABLE HAUTE TENSION, ET ELEMENT DE CABLE MUNI D'UNE TELLE ENVELOPPE

(30) Priorität: 18.02.2002 EP 02405124
(43) Veröffentlichungstag der Anmeldung: 17.11.2004
(73) Patentinhaber: ABB Schweiz AG, 5400 Baden (CH)
(72) Erfinder: GRAMESPACHER, Hansjoerg, CH-5443 Niederrohrdorf (CH); GREUTER, Felix, CH-5406 Rütihof (CH); HAGEMEISTER, Michael, CH-8006 Zürich (CH)
(74) Vertreter: ABB Patent Attorneys
(86) Internationale Anmeldenummer: PCT/CH2003/000073
(87) Internationale Veröffentlichungsnummer: WO 2003/069752

(56) Entgegenhaltungen:
- EP-B- 0 875 087
- WO-A-00/74191
- US-A- 4 418 240
- US-B1- 6 171 669

## Beschreibung

### TECHNISCHES GEBIET

Bei der Erfindung wird ausgegangen von einem Körper zum Umhüllen des Endes, einer Abzweigung oder einer Verbindungsstelle eines Hochspannungskabels nach dem Oberbegriff von Patentanspruch 1. Die Erfindung betrifft auch ein mit einem solchen Hüllkörper versehenes Kabelelement, insbesondere einen Kabelendverschluss oder eine Kabelmuffe.

Der Hüllkörper enthält mindestens ein Feldsteuerungselement auf der Basis eines Polymers und eines in das Polymer eingebetteten und Mikrovaristoren enthaltenden Füllstoffs. Das Feldsteuerungselement zeichnet sich durch eine nichtlineare Strom-Spannungs-Kennlinie aus und weist mindestens einen längs einer Achse erstreckten und flächenhaft ausgebildeten Hohlkörperabschnitt auf mit einer durch Verformen des Hüllkörpers an eine Aussenfläche des Kabels führbaren axialsymmetrischen Innenfläche.

Grundsätzlich kann der Hüllkörper zwei Klassen von Hüllkörpern zugeordnet werden. Die der einen Klasse zugeordneten Hüllkörper enthalten als Feldsteuerungselement elektrisch leitfähige - in der Regel mit Russ gefüllte - Elastomere. Bei diesen Elastomeren wird die feldsteuernde Wirkung durch die geometrische Formgebung, wie z.B. einer trichterförmigen Öffnung, erzielt. Diese Art der Feldsteuerung wird als geometrische Feldsteuerung bezeichnet. Die der anderen Klasse zugeordneten Hüllkörper enthalten als Feldsteuerungselement Polymere, in die Füllstoffe mit feldsteuemden Eigenschaften eingebettet sind. Diese feldsteuernden Materialeigenschaften können z.B. durch relative hohe Dielektrizitätszahlen oder durch nichtlineare, d.h. feldstärkeabhängige, elektrische Widerstände oder durch eine Kombination von beidem erzielt werden. Diese Art von Feldsteuerungselementen besitzen den Vorteil, dass sie aus dünnwandigen, zylinderförmigen Röhren oder Schläuchen bestehen können und man so in der Lage ist, dünne, platzsparende und somit auch kostengünstige Produkte herzustellen.

### STAND DER TECHNIK

Ein Hüllkörper der eingangs genannten Art, welcher bei der Herstellung eines Endverschlusses eines geschirmten kunststoffisolierten Einleiterkabels mit Betriebsspannungen von 10 kV bzw. 20 kV verwendet wird, ist in EP 0 875 087 B1, welche als nächstliegender Stand der Technik angesehen wird, beschrieben. Zur Herstellung eines Kabelendverschlusses eines 20 kV-Kabels werden an einem Kabelende zunächst Drähte einer Kabelabschirmung von einer zwischen einem Kabelleiter und der Abschirmung vorgesehenen Kabelisolation abgehoben und unter Bildung eines Drahtbundes festgesetzt. Eine auf der Kabelisolation befindliche leitfähige Schicht, z.B. eine Graphitbeschichtung, wird bis zu einer über den Drahtbund vorstehenden Absetzkante abgetragen. Sodann wird die am Ende des Kabelleiters vorgesehene Kabelisolierung entfernt und ein feldsteuemder, rohrförmig ausgebildeter Hüllkörper auf das Kabelende aufgebracht. Dieser Hüllkörper ist gebildet von einem Feldsteuerungselement aus einem Polymer und einem Mikrovaristoren auf der Basis von dotiertem Zinkoxid enthaltenden Füllstoff sowie von einer das Feldsteuerungselement koaxial umgebenden Aussenschicht aus einem wärmeschrumpfbaren Isoliermaterial. Das Feldsteuerungselement kontaktiert mit seinem einen Ende das bis an die Absetzkante geführte Ende der leitfähigen Schicht. Das andere Ende des Feldsteuerungselements ist über die Absetzkante hinweg auf die Kabelisolation geführt und kann je nach Steuerungsaufgabe mit dem offenliegenden Ende des Kabelleiters verbunden sein oder aber auch ohne Verbindung mit dem Kabelleiter auf der Kabelisolation enden.

Aufbau und Eigenschaften eines im vorgenannten Hüllkörper verwendeteten Feldsteuerungselements sind ausführlich in einer Veröffentlichung von R. Strümpler et al. "Smart Varistor Composites" Proceedings of the 8^{th} CIMTEC Ceramic Congress and Forum on Materials Symposium (1994) beschrieben. Das Feldsteuerelement ist als Verbundwerkstoff ausgebildet und ist mit einem keramischen Material gefüllt, das aus kleinen - im wesentlichen kugelförmigen - ZnO Teilchen besteht. Die ZnO Teilchen sind mit verschiedenen Metalloxiden, wie z.B. Sb₂O₃, Bi₂O₃, Cr₂O₃ und Co₃O₄, dotiert und werden bei Temperaturen zwischen 900 °C und 1300 °C gesintert. Die gesinterten Teilchen besitzen wie ein Varistor nichtlineare, von der elektrischen Feldstärke abhängige, elektrische Eigenschaften. Bei kleinen Feldstärken verhalten sich die Teilchen wie ein Isolator und mit zunehmender Feldstärke werden die Teilchen leitfähiger. Aufgrund dieser nichtlinearen elektrischen Eigenschaften weist der polymere Verbundwerkstoff gute Feldsteuerungseigenschaften auf.

Ein weiterer Hüllkörper zum Umhüllen einer Verbindungsstelle zweier Hochspannungskabel mit unterschiedlichen Durchmessern ist in US 6,171,669 beschrieben. Dieser Hüllkörper weist auf seiner Innenseite eine Schicht aus feldsteuerndem Material aus. Diese Schicht ist an beiden Kabeln jeweils auf einen Übergangsbereich geführt, welcher zwischen der jeweiligen Kabelisolation und einer Schicht aus halbleitendem Material angeordnet ist.

### DARSTELLUNG DER ERFINDUNG

Der Erfindung, wie sie in den Patentansprüchen angegeben ist, liegt die Aufgabe zugrunde, einen Hüllkörper der eingangs genannten Art zu schaffen, welcher in besonders einfacher Weise eine sehr genaue Feldsteuerung eines Kabelelements, wie insbesondere eines Kabelendverschlusses oder einer Kabelmuffe, ermöglicht.

Beim erfindungsgemässen Hüllkörper ist vor dem Aufbringen des Hüllkörpers auf das kabel die Innenfläche des Hohlkörperabschnitts abweichend von der Aussenfläche des Kabels ausgebildet und zwar derart, dass durch Verändern der Anzahl der Mikrovaristoren pro Flächeneinheit infolge Dehnung und/oder Schrumpfung des Hohlkörperabschnitts nach dem Verformen beim Aufbringen die Feldsteuerung im Hüllbereich erreicht ist. Die elektrischen Eigenschaften des Feldsteuerungselements hängen wesentlich vom gegenseitigen Abstand der Mikrovaristoren in der polymeren Matrix bzw. dem Anteil an Mikrovaristoren ab. So nimmt z. B. die Dielektrizitätszahl mit zunehmender Konzentration an Mikrovaristoren, insbesondere solcher auf der Basis einer Keramik, wie etwa ZnO, zu und sinkt umgekehrt der elektrische Widerstand im allgemeinen bei gegebener Feldstärke mit zunehmender Füllstoffkonzentration. Wird nun das Feldsteuerungselement bei der Herstellung eines Kabelelementes, beispielsweise eines Kabelendverschlusses oder einer Kabelmuffe, gedehnt/geschrumpft, so vergrössern/verringern sich mit der Dehnung/Schrumpfung die gegenseitigen Abstände der Mikrovaristoren in Umfangsrichtung des Feldsteuerelements bzw. nimmt die Anzahl an Mikrovaristoren pro Flächeneinheit des flächenhaft ausgeführten Hohlkörperabschnitts ab/zu und ändern sich dementsprechend die elektrischen Eigenschaften des Feldsteuerungselements. Diese Tatsache macht sich das erfindungsgemässe Hüllelement in vorteilhafter Weise zunutze, um durch unterschiedliche lokale Dehnung und/oder Schrumpfung des Hohlkörperabschnitts längs der Achse lokal unterschiedliche elektrische Eigenschaften, wie insbesondere Dielektrizitätszahl und elektrischer Widerstand, zu erzeugen. Man erhält so neben den auf das Material der Mikrovaristoren bezogenen Parametern, wie z. B. Füllstoffgehalt, Zusammensetzung, Sinterbedingungen sowie geometrische Abmessungen, durch die Festlegung der Dehnungs/Schrumpfungsverhältnisse längs des Hohlkörperabschnitts des Feldsteuerungselements einen zusätzlichen Design-Parameter, um die Feldsteuerungseigenschaften in dem mit dem erfindungsgemässen Hüllkörper versehenen Kabelelement zu optimieren. Daher kann das erfindungsgemässe Hüllelement auch in Kabeln im Spannungsbereich von weit über 100 kV verwendet werden.

Zugleich weisen das Feldsteuerelement und damit auch der Hüllkörper eine geringe Wanddicke auf. Daher zeichnet sich ein mit dem erfindungsgemässen Hüllkörper versehenes und für Hochspannungsanwendungen vorgesehenes Kabelelement trotz optimierter elektrischer Eigenschaften durch ein schlankes Design aus. Hieraus ergeben sich zusätzlich weitere Vorteile, wie etwa:
a) Geringerer Platzbedarf. Dies ist besonders bei Anschlüssen in gasisolierten Hochspannungsanlagen (GIS-Anlage) bedeutsam, da mit dünneren Kabelelementen, wie etwa Endverschlüssen, auch geringere Rohrdurchmesser in der GIS-Anlage möglich werden.
(b) Geringerer Materialbedarf. Bei dünneren Feldsteuerelementen werden auch dünnere Kabelelemente für Aussenanwendungen möglich. Da aufgrund der Länge bei Aussenanwendungen heute oft sehr viel Isolationsmaterial benötigt wird, kann mit dünneren Kabelelementen Material eingespart und der Montageaufwand kann geringer gehalten werden.
(c) Grösserer Anwendungsbereich bei verschiedenen Kabeldurchmessem. Da bei dünneren Kabelelementen die zum Aufschieben auf ein Kabel benötigten Kräfte im allgemeinen geringer sind als bei Kabelelementen mit geometrischer Feldsteuerung, können diese Kabelelemente so dimensioniert werden, dass eine Grösse für mehrere Kabeldurchmesser eingesetzt werden kann.

Vor dem Aufbringen des Hüllkörpers auf das Kabel kann sich die Innenabmessung des Hohlkörperabschnitts längs der Achse stetig ändern. Beim Aufbringen des Hüllkörpers auf einen als Zylinder oder Flachband ausgebildeten Abschnitt des Kabels wird so die für die erwünschten elektrischen Eigenschaften des Feldsteuerelements angestrebte Dehnung/Schrumpfung erreicht.

Grundsätzlich ist es jedoch auch möglich, dass vor dem Aufbringen des Hüllkörpers auf das Kabel die Innenabmessung längs der Achse konstant gehalten ist. Die für die erwünschten elektrischen Eigenschaften des Feldsteuerelements angestrebte Dehnung/Schrumpfung wird dann durch eine diese Dehnung/Schrumpfung bewirkende Ausbildung der Mantelfläche des Kabels bzw. der Kabelisolation erreicht.

Es empfiehlt sich, dass ein die Abmessung der Innenfläche bestimmender Innendurchmesser sich längs der Rotationsachse stetig, vorzugsweise monoton, insbesondere linear ändert. Da die Innenfläche des erfindungsgemässen Hüllkörpers dann überwiegend konisch ausgebildet ist, kann bei einem in einem Giessverfahren hergestellten Hüllkörper ein hierbei verwendeter Giesskem verhältnismässig einfach abgezogen werden.

Zur Lösung einfacher Feldsteueraufgaben ist es ausreichend, wenn sich der Innendurchmesser des Hohlkörperabschnitts längs der Rotationsachse linear verändert. Hierbei, aber auch bei der Lösung komplizierterer Feldsteueraufgaben, sollte das Verhältnis des minimalen Innendurchmessers zum maximalen Innendurchmesser des Hohlkörperabschnitts zweckmässigerweise das 0,2- bis 1,0- fache betragen.

Eine zusätzliche Verbesserung der Feldsteuerung durch Veränderung des elektrischen Widerstands bzw. der Impedanz wird dadurch erreicht, dass sich neben der Innenabmessung auch die Wandstärke des Hohlkörperabschnitts längs der Achse ändert. Beispielsweise verringert sich mit abnehmender Wanddicke auch die Querschnittsfläche und erhöht sich damit der Widerstand parallel zur Achse. Die Wandstärke kann aber auch in gewissen Bereichen, vorzugsweise dort, wo eine höhere elektrische Leitfähigkeit gewünscht wird - beispielsweise direkt an der Absetzkante - entsprechend gross bemessen sein.

In fertigungtechnisch einfacher Weise kann das Feldsteuerungselement in eine Innenfläche eines elastisch verformbaren Tragkörpers aus Isoliermaterial eingeformt sein.

Anstelle nur eines in den Tragkörper eingeformten ersten Feldsteuerungselements kann mindestens ein weiteres Feldsteuerungselement in den Tragkörper eingeformt sein. Zur Erzielung einer guten Feldsteuerung auch bei hohen Spannungen, beispielsweise bei Spannungen über 100 kV, sollte das weitere Feldsteuerungselement das erste Feldsteuerungselement umgeben und von diesem durch eine elektrisch isolierende Zwischenschicht getrennt sein.

Besonders geeignet als Material für das erste Feldsteuerungselement und das gegebenenfalls vorgesehene weitere Feldsteuerungselement sind Polymere, in die als Mikrovaristoren durch Sintern von metalloxiddotiertem Zinkoxidgranulat gebildete, vorwiegend kugelförmige Partikel eingebettet sind. Die Mikrovaristoren können auch Mikrovaristoren auf der Basis von dotiertem SnO₂, TiO₂, SrTiO₃ oder SiC jeweils allein oder in Mischung umfassen. Durch unterschiedliche Füllstoffkonzentrationen, Füllstoffwahl und/oder Sinterbedingungen können die elektrischen Eigenschaften der Feldsteuerungselemente erheblich verändert werden. Dadurch und durch Wahl von mindestens zwei Feldsteuerungselementen, welche unterschiedliche elektrische Eigenschaften und/oder Abmessungen aufweisen, kann so der erfindungsgemässe Hüllkörper eine Vielzahl von Feldsteueraufgaben mit besonders grosser Genauigkeit lösen.

Es empfiehlt sich, neben den Mikrovaristoren als Füllstoff auch elektrisch leitfähige Partikel in das Polymer einzubetten, da so zum einen eine hohe Energieaufnahme eines mit dem Hüllelement versehenen Kabelelements, beispielsweise eines Kabelendverschlusses, sichergestellt ist, und da zum anderen durch die vorzugsweise als Metallschuppen oder Graphit ausgebildeten Partikel die Dielektrizitätszahl des Feldsteuerungselements in einer zur Lösung bestimmter Feldsteueraufgaben besonders vorteilhaften Weise erhöht wird. Um eine hohe Energieaufnahme und eine wirksame Erhöhung der Dielektrizitätszahl zu erreichen, sollten die im Füllstoff vorgesehenen, elektrisch leitfähigen Teilchen ca. 0,05 bis ca. 5 Volumenprozent des Füllstoffes ausmachen. Diese können auch direkt auf den Mikrovaristoren angebracht sein, um so die Herstellung des Hüllkörpers zu vereinfachen.

Bei einem vorzugsweise als Kabelendverschluss oder Kabelmuffe ausgeführten Kabelelement mit einem Kabelabschnitt, welcher einen auf Hochspannungspotential führbaren Kabelleiter, eine elektrisch leitfähige Kabelschirmung und eine zwischen Kabelleiter und Kabelschirmung angeordnete Kabelisolierung umfasst, und mit einem auf dem Kabelabschnitt angebrachten erfindungsgemässen Hüllkörper versehen ist, kann eine gute Feldsteuerung erreicht werden, wenn das erste Feldsteuerungselement in einem eine Absetzkante einer Beschichtung der Kabelschirmung und einen ungeschirmten Bereich der Kabelisolierung umschliessenden ersten Abschnitt eine geringere Anzahl an Mikrovaristoren pro Flächeneinheit aufweist als in einem sich daran anschliessenden und einen geschirmten Bereich der Kabelisolierung umfassenden zweiten Abschnitt. Um eine für Spannungen im Bereich einiger 10 kV bis zu einigen 100 kV und insbesondere für Gleichstromanwendungen besonders gute Feldsteuerung zu ereichen, sollte das Feldsteuerungselement die Kabelschirmung und den Kabelleiter miteinander verbinden.

Bei höheren Spannungen wird eine besonders gute Feldsteuerung erreicht, wenn das Feldsteuerungselement und ein zusätzlich vorgesehenes äusseres Feldsteuerungselement, welches das andere Feldsteuerungselement koaxial umgibt, in axialer Richtung über die Absetzkante der Kabelschirmung geführt und lediglich mit der Kabelschirmung verbunden sind. Diese vorteilhafte Wirkung wird auch erzielt, wenn das äussere Feldsteuerungselement auf floatendem Potential gehalten wird. Für gewisse Anwendungen, insbesondere bei Hochspannungsanwendungen, kann es von Vorteil sein, wenn ein weiteres äusseres Feldsteuerelement direkt mit dem auf Hochspannungspotential liegenden Leiter verbunden ist.

Die vorstehend beschriebene Wirkung kann noch ganz erheblich verbessert werden, wenn zwischen den beiden Feldsteuerungselement zusätzlich eine elektrisch leitende Schicht angeordnet ist, welche mit dem äusseren Feldsteuerungselement elektrisch leitend verbunden ist.

Aus Gründen einer reproduzierbaren Herstellung eines dielektrisch hochwertigen Kabelelements empfiehlt es sich, auf der Innenfläche des Hohlkörperabschnitts des inneren Feldsteuerungselements eine ringförmig ausgebildete Schicht aus elektrisch leitfähigem Material aufzubringen, welche sich in Richtung der Rotationsachse über die Absetzkante erstreckt. Durch diese Massnahmen wird eine Entlastung des dielektrisch kritischen Bereichs um die Absetzkante erreicht. Dies ist insofern von Vorteil, als diese ringförmig ausgebildete Schicht im Unterschied zur Absetzkante nicht am Montageort, sondern in einer Fertigungsstätte hergestellt wird und daher dielektrisch besonders hochwertig ausgeführt ist.

### KURZE BESCHREIBUNG DER ZEICHNUNGEN

Anhand von Zeichnungen werden Ausführungsbeispiele der Erfindung erläutert. Hierbei zeigt:
- Fig.1: eine Aufsicht auf einen axial geführten Schnitt durch eine erste Ausführungsform eines rotationssymmetrisch ausgeführten Hüllkörpers nach der Erfindung,
- Fig.2: eine Aufsicht auf einen axial geführten Schnitt durch einen mit dem Hüllkörper gemäss Fig.1 versehenen Kabelendverschluss,
- Fig.3: eine Aufsicht auf einen axial geführten Schnitt durch eine zweite Ausführungsform eines rotationssymmetrisch ausgeführten Hüllkörpers nach der Erfindung, und
- Fig.4: eine Aufsicht auf einen axial geführten Schnitt durch einen mit einer dritten Ausführungsform des Hüllkörpers nach der Erfindung versehenen, rotationssymmetrisch ausgeführten Kabelendverschluss.

### WEGE ZUR AUSFÜHRUNG DER ERFINDUNG

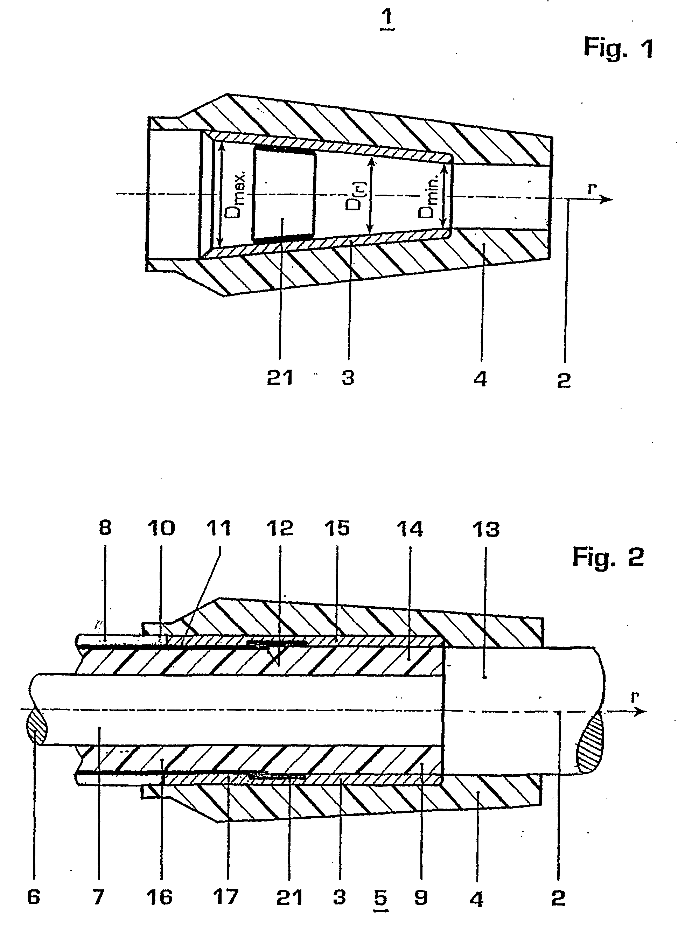

In allen Figuren beziehen sich gleiche Bezugszeichen auch auf gleichwirkende Teile. Ein in Fig.1 dargestellter hohler Hüllkörper 1 ist rotationssymmetrisch ausgeführt und weist ein im wesentlichen als hohler Kegelstumpf ausgebildetes und längs einer Rotationsachse 2 in Richtung einer Koordinate r erstrecktes, flächenhaft ausgebildetes Feldsteuerungselement 3 aus einem elastomeren, nichtlineare elektrische Eigenschaften aufweisenden Material auf. Das Material enthält neben dem Elastomer auch in das Elastomer als Matrix eingebettete Mikrovaristoren, welche mit Vorteil von dotierten und gesinterten Zinkoxidteilchen gebildet sind. Typische Zusammensetzungen, Teilchengrössen und Sinterbedingungen sind dem eingangs genannten Stand der Technik entnehmbar. Das Feldsteuerungselement 3 ist in eine Innenfläche eines ebenfalls elastomeren, jedoch aus einem isolierenden Material bestehenden hohlen Tragkörpers 4 eingeformt. Als Elastomer können z.B. Silikone, EPDM, Naturkautschuk, Nitrilkautschuk, thermoplastische Elastomere oder Mischungen von verschiedenen Elastomeren verwendet werden. Der Innendurchmesser D(r) des Feldsteuerelements nimmt längs der Rotationsachse 2 in Richtung wachsender Koordinate r ab. Daher wird das elastomere Feldsteuerelement beim Aufschieben auf ein Kabelende längs der Rotationsachse 2 unterschiedlich gedehnt und die elektrischen Eigenschaften des aufgeschobenen Feldsteuerelements 3 sind dann von der Position auf dem Kabel abhängig.

Dies ist aus Fig. 2 ersichtlich. In dieser Figur ist ein Kabelendverschluss 5 für ein Betriebsspannungen von einigen 10 kV führendes Kabel dargestellt. Das Kabel weist einen Kabelabschnitt 6 auf mit einem die Spannung führenden Kabelleiter 7, einer elektrisch leitfähigen Kabelschirmung 8 und einer zwischen Kabelleiter 7 und Kabelschirmung 8 angeordnete Kabelisolation 9. Die Kabelschirmung 8 enthält Drähte, welche von der Kabelisolation 9 abgehoben und unter Bildung eines Drahtbundes 10 am rechten Ende der Kabelschirmung festgesetzt sind. Eine auf der Kabelisolation 9 vorgesehene, elektrisch leitende Beschichtung 11 ist bis zu einer über den Drahtbund 10 vorstehenden Absetzkante 12 abgetragen. Der Kabelleiter 7 trägt an seinem Ende einen Kabelschuh 13. Auf eine von der Kabelschirmung 8, der Beschichtung 11, einem ungeschirmten Bereich 14 der Kabelisolation 9 und dem Kabelschuh 13 gebildeten Mantelfläche ist der Hüllkörper 1 aufgebracht und zwar derart, dass das Feldsteuerungselement 3 die Beschichtung 11 über die Absetzkante 12 hinweg mit dem auf dem Potential des Kabelleiters 7 befindlichen Kabelschuh 13 verbindet und der Tragkörper 4 den Kabelabschnitt 6 flüssigkeitsdicht abschliesst. Ersichtlich ist der Innendurchmesser des Feldsteuerungselements 3 in einem die Absetzkante 12 und den ungeschirmten Bereich 14 der Kabelisolation 9 umschliessenden Abschnitt 15 stärker gedehnt ist als in einem sich daran anschliessenden und einen geschirmten Bereich 16 der Kabelisolation umfassenden Abschnitt 17.

Bei der Ausführungsform nach den Figuren 1 und 2 ist der Innendurchmesser D(r) des Feldsteuerungselements 3 nach der Fertigstellung des Kabelendverschlusses längs der Rotationsachse 2 linear gedehnt. Die Änderung des Durchmessers kann aber eine beliebig andere Form aufweisen und muss auch nicht über die gesamte Länge des hohl ausgebildeten Feldsteuerungselements 3 gehen, sondern gegebenenfalls lediglich über einen vorgegebenen Abschnitt. Wird der maximale Innendurchmesser dieses Hohlkörperabschnitts mit Dₘₐₓ und der minimale Innendurchmesser mit Dₘᵢₙ (Fig. 1) bezeichnet, so kann das Verhältnis Dₘᵢₙ/Dₘₐₓ bei einem gegebenen Endverschluss zwischen 0,2 und 1 liegen. Die Dehnung des Feldsteuerungselementes 3 an der Stelle mit dem minimalen Innendurchmesser Dₘᵢₙ kann nach der Installation auf dem Kabel zwischen 2 % und 80 % betragen. Dementsprechend hat sich die Anzahl der Mikrovaristoren pro Flächeneinheit des Feldsteuerungselements 3 verringert und haben sich so der elektrische Widerstand und die Dielektrizitätszahl des Feldsteuerungselements 3 an dieser Stelle gegenüber dem Widerstand und der Dielektrizitätszahl an der Stelle mit dem maximalen Innendurchmesser Dₘₐₓ verändert. Diese Veränderungen von Widerstand und Dielektrizitätszahl begünstigen die Feldsteuerung des Kabelenverschlusses beträchtlich.

Aus der Fig.2 ist zu ersehen, dass das Feldsteuerungselement 3 eine durchgehende Verbindung darstellt, so dass Erdpotential und Hochspannungspotential verbunden sind. Dies ist zur Lösung bestimmter Steueraufgaben, insbesondere im Spannungsbereich von bis zu einigen 10 kV und bei Gleichstromanwendungen, vorteilhaft. Grundsätzlich kann das Feldsteuerungselement 3 aber auch an einem seiner beiden Enden potentialfrei gehalten sein.

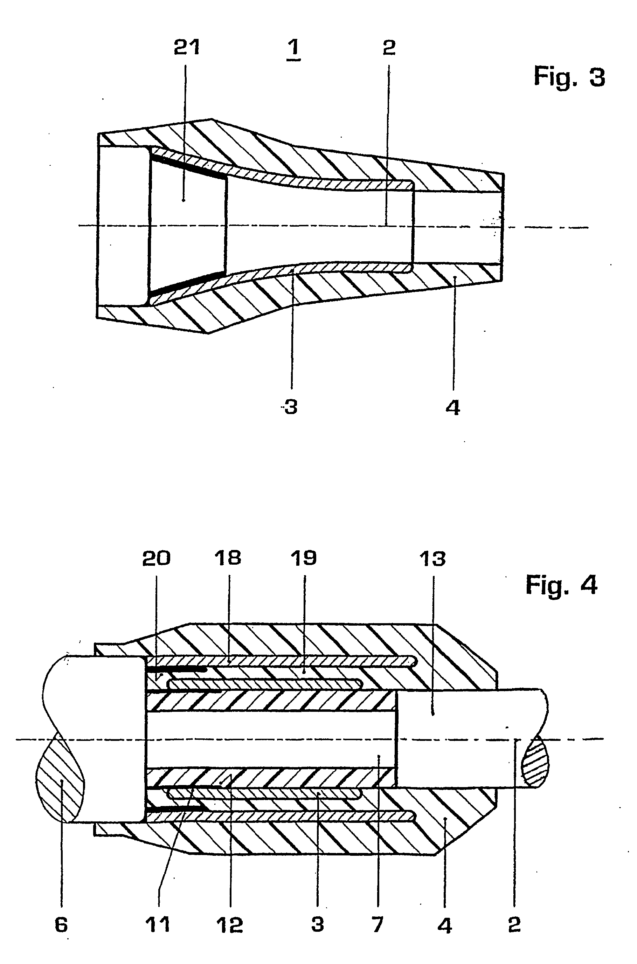

Eine weitere Möglichkeit, den elektrischen Widerstand bzw. die Impedanz eines Kabelelementes, wie etwa des Kabelendverschlusses, längs der Rotationsachse 2 zu variieren, besteht in einer Veränderung der Wanddicke des Feldsteuerungselementes 3. Mit zunehmender Wanddicke erhöht sich die Querschnittsfläche, d.h. der Widerstand parallel zur Rotationsachse verringert sich. In der Fig. 3 ist eine zweite Ausführungsform des Hüllkörpers 1 nach der Erfindung zur Verwendung in einem Kabelendverschluss dargestellt, bei dem die feldsteuernden, nichtlinearen elektrischen Eigenschaften durch die Änderung der Dehnung und die Änderung des Querschnittes längs der Rotationsachse zusätzlich beeinflusst werden. Für die Lösung von Feldsteueraufgaben, bei denen relativ starke Feldgradienten auftreten, wie etwa in Kabeln mit Betriebsspannungen von mehr als 100kV, sind derart ausgeführte feldsteuernde Hüllkörper besonders geeignet.

Eine weitere Möglichkeit der Optimierung der Feldsteuerung bei Kabefendverschlüssen oder Kabelmuffen besteht in der Verwendung von zwei koaxial übereinander angeordneten Feldsteuerungselementen aus elastomerem Material, welches Mikrovaristoren enthält. Hierbei können die Feldsteuerungselemente 3, 18 gegebenenfalls direkt übereinanderliegen, sind im allgemeinen aber - wie in einer dritten Ausführungsform des Hüllkörpers nach der Erfindung in Figur 4 dargestellt ist - durch eine Isolationsschicht 19 voneinander getrennt. Die Feldsteuerungselemente 3, 18 können unterschiedliche Längen besitzen und in der Längsrichtung versetzt sein, so dass z. B. das aussenliegende Feldsteuerungselement 18 über das innenliegende 3 hinausragt. Zwischen dem Feldsteuerungselement 18 und der isolierenden Zwischenschicht 19 kann zusätzlich eine Schicht 20 aus elektrisch leitfähigem Material angeordnet sein. Diese Schicht ist mit Vorteil von einem elektrisch leitfähigen Elastomer oder von einem leitfähigen Lack gebildet. Diese Schicht 20 ist entweder in elektrisch isolierender Weise in eine die beiden Feldsteuerungselemente 3, 18 voneinander trennende Isolationsschicht 19 eingebettet oder ist mit dem Feldsteuerungselement 18 elektrisch leitend verbunden und weist wegen ihrer kapazitiven Wirkung eine gute Feldsteuerungsfunktion auf. Die beiden Feldsteuerungselemente 3 und 18 müssen nicht notwendigerweise die gleichen elektrischen Eigenschaften aufweisen. Bedingt durch unterschiedliche Füllstoffgehalte sowie durch unterschiedliche Zusammensetzung und Sinterbedingungen der im Füllstoff vorgesehenen Mikrovaristoren können sich die elektrischen Eigenschaften beider Feldsteuerungselemente ganz wesentlich unterscheiden.

Um den Ort der höchsten elektrischen Beanspruchung von der Absetzkante 12 der leitfähigen Schicht 11 auf dem Kabel zu trennen, empfiehlt es sich, auf der Innenseite des Feldsteuerungselements 3 eine ringförmig ausbildete, leitfähige Schicht 21 aufzubringen oder in das feldsteuernde Material zu integrieren. Durch diese Schicht wird erreicht, dass das Gebiet der höchsten elektrischen Beanspruchung nicht mit der Absetzkante 12 zusammenfällt, sondern - je nach Länge der leitfähigen Schicht 21 - zum Ende des Kabels hin verschoben wird.

Die Herstellung des erfindungsgemässen Hüllkörpers kann mit den heute in der Elastomercompoundierung verwendeten Verarbeitungsmaschinen erfolgen. So kann z. B. bei der Verwendung von einem LSR Silikon als Polymermatrix das dotierte und gesinterte ZnO-Pulver mit einem Rührwerk eingearbeitet werden. Bei der Verwendung von einem EPDM oder einem Festsilikon kann die Einarbeitung des Füllstoffs in die Elastomermatrix mit Hilfe eines Walzwerkes erfolgen.

Vorteilhaft für die Montage und Anwendung des erfindungsgemässen Hüllkörpers ist es im allgemeinen, wenn die Feldsteuerungselemente 3, 18 und das Isolationsmaterial des Tragkörpers 4 zusammen gefertigt werden und bei der Montage des als Kabelendverschluss 5 ausgebildeten Kabelelements als ein Teil über das Kabelende gezogen werden können. Die Herstellung eines solchen Hüllkörpers 1 kann mit den heute üblichen Produktionsmethoden in der Kunststoffverarbeitung, z. B. dem Spritzgussprozess, erfolgen. Ein Vorteil hierbei ist, dass man eine gute Haftung der verschiedenen Materialien (Feldsteuerungselement 3, 18, Tragkörper 4, leitfähige Zwischenschichten 20, 21) untereinander durch den Produktionsprozess (Druck, Temperatur, Vulkanisationszeit und Verwendung von Haftvermittlern) einstellen kann und damit eine gute dielektrische Festigkeit der elektrisch hoch beanspruchten Grenzflächen erzielen kann. Ausserdem ist so ausgeschlossen, dass eine Verschmutzung der Grenzflächen bei der Montage der Kabelelemente auftritt.

Die Herstellung des Hüllkörpers 1 gemäss Fig.1 kann wie folgt ausgeführt werden: Ein mit Oxiden von typischerweise Bi, Co, Cr, Mn und Sb und wahlweise weiteren Elementen, wie etwa Al, B, Fe, Ni, Si, dotiertes ZnO-Granulat wird bei Temperaturen zwischen 900 °C und 1300 °C gesintert. Der Sinterprozess kann z.B. in einem Drehrohrofen oder in einem konventionellen Batch-Ofen erfolgen. Nach dem Sintern kann das gebildet Mikrovaristor-Pulver auf eine gewünschte Teilchengrössenfraktion von beispielsweise 100 µ, gesiebt werden. Wahlweise können anschliessend metallische Zusatzfüllstoffe eingemischt und an die Mikrovaristoren angesintert werden. Das gesiebte Pulver wird z. B. auf einem Walzwerk in ein Elastomer (z. B. in ein HTV Silikon) eingearbeitet. Je nach Elastomertyp können hier weitere Additive (wie z. B. Vemetzungshilfsmittel, Stabilisatoren) zugegeben werden. Der Volumenanteil des gesinterten Pulvers in dem Feldsteuermaterial beträgt typischerweise zwischen 20 und 45 Prozent. Das so hergestellte Compound kann nun mit einem konventionellen Spritzgussverfahren oder einem Pressverfahren in die gewünschte Form gefüllt und das Elastomer in der Form vemetzt werden. Das so gebildete vernetzte Feldsteuerelement 3 wird in einem zweiten Spritzgussprozess oder Giessverfahren mit dem Isoliermaterial (z. B. Flüssigsilikonkautschuk) unter Bildung des Hüllkörpers 1 umgossen.

Eine für Aussenanwendungen notwendige Beschirmung des Kabelendverschlusses kann direkt mit dem Tragkörper 4 vergossen werden, kann alternativ aber auch in einem getrennten Herstellungsprozess gegossen und nachfolgend auf den Kabelendverschluss aufgeschoben werden. Die Vorteile der getrennt hergestellten Schirme liegen in einer grösseren Flexibilität bei verschiedenen Anwendungen (z. B. bei verschiedenen Verschmutzungsgraden der Umgebung) und damit kostengünstigeren Produktionsmethoden.

Anstelle eines Elastomers kann irgendein schrumpffähiges Polymer, vorzugsweise ein Thermoplast, verwendet werden. Die unterschiedlichen Konzentrationen von Mikrovaristoren pro Flächeneinheit verteilt über die Achse und damit eine besonders genaue Feldsteuerung wird dann bei vorbestimmter Ausgestaltung der Innenfläche beim Verformen des Hüllkörpers in einem Schrumpfvorgang erreicht.

### Bezugszeichenliste

- 1: Hüllkörper
- 2: Rotationsachse
- 3: Feldsteuerungselement
- 4: Tragkörper
- 5: Kabelendverschluss
- 6: Kabelabschnitt
- 7: Kabelleiter
- 8: Kabelschirmung
- 9: Kabelisolation
- 10: Drahtbund
- 11: Beschichtung
- 12: Absetzkante
- 13: Kabelschuh
- 14, 16: Bereiche
- 15, 17: Abschnitte
- 18: Feldsteuerungselement
- 19: Isolationsschicht
- 20, 21: leitfähige Schichten

## Patentansprüche

1. Körper (1) zum Umhüllen des Endes, einer Abzweigung oder einer Verbindungsstelle eines Hochspannungskabels mit einem eine nichtlineare Strom-Spannungs-Kennlinie aufweisenden ersten Element (3) zum Steuern des elektrischen Feldes im Hüllbereich, welches Feldsteuerelement (3) ein Polymer und einen in das Polymer eingebetteten und Mikrovaristoren enthaltenden Füllstoff enthält sowie mindestens einen längs einer Achse (2) erstreckten und flächenhaft ausgeführten Hohlkörperabschnitt mit einer durch Verformen des Hüllkörpers (1) an eine Aussenfläche des Kabels führbaren axialsymmetrischen Innenfläche, **dadurch gekennzeichnet, dass** vor dem Aufbringen des Hüllkörpers (1) auf das Kabel die Innenfläche des Hohlkörperabschnitts abweichend von der Aussenfläche des Kabels ausgebildet ist und zwar derart, dass durch Verändern der Anzahl der Mikrovaristoren pro Flächeneinheit infolge Dehnung und/oder Schrumpfung des Hohlkörperabschnitts nach dem Verformen beim Aufbringen die Feldsteuerung im Hüllbereich erreicht ist.

2. Hüllkörper nach Anspruch 1, **dadurch gekennzeichnet, dass** ein die Abmessung der Innenfläche bestimmender Innendurchmesser (D(r)) sich längs der Achse (2) stetig, vorzugsweise monoton, insbesondere linear, ändert.

3. Hüllkörper nach Anspruch 2, **dadurch gekennzeichnet, dass** das Verhältnis des minimalen Innendurchmessers (Dₘᵢₙ) zum maximalen Innendurchmesser (Dₘₐₓ) der Innenfläche das 0,2- bis 1,0-fache beträgt.

4. Hüllkörper nach einem der Ansprüche 1 bis 3, **dadurch gekennzeichnet, dass** sich neben dem Innendurchmesser der Innenfläche auch die Wandstärke des Hohlkörperabschnitts längs der Achse (2) ändert.

5. Hüllkörper nach einem der Ansprüche 1 bis 4, **dadurch gekennzeichnet, dass** neben den Mikrovaristoren als Füllstoff auch elektrisch leitfähige Partikel in das Polymer eingebettet sind.

6. Hüllkörper nach Anspruch 5, **dadurch gekennzeichnet, dass** die elektrisch leitfähigen Partikel auf die Mikrovaristoren aufgebracht sind.

7. Hüllkörper nach einem der Ansprüche 5 oder 6, **dadurch gekennzeichnet, dass** die im Füllstoff vorgesehenen, elektrisch leitfähigen Teilchen ca. 0,05 bis ca. 5 Volumenprozent des Füllstoffes ausmachen.

8. Hüllkörper nach einem der Ansprüche 1 bis 7, **dadurch gekennzeichnet, dass** auf der Innenfläche des Hohlkörperabschnitts des ersten Feldsteuerungselements (3) eine ringförmig ausgebildete Schicht (21) aus elektrisch leitfähigem Material aufgebracht oder integriert ist, welche sich in Richtung der Achse (2) lediglich über einen Teilabschnitt des ersten Feldsteuerungselements (3) erstreckt.

9. Hüllkörper nach einem der Ansprüche 1 bis 8, **dadurch gekennzeichnet, dass** das erste Feldsteuerungselement (3) in eine Innenfläche eines elastisch verformbaren Tragkörpers (4) aus Isoliermaterial eingeformt ist.

10. Hüllkörper nach Anspruch 9, **dadurch gekennzeichnet, dass** in den Tragkörper (4) mindestens ein das erste Feldsteuerungselement (3) umgebendes und von diesem durch eine elektrisch isolierende Schicht (19) getrenntes zweites Feldsteuerungselement (18) eingeformt ist.

11. Hüllkörper nach Anspruch 10, **dadurch gekennzeichnet, dass** das Material des zweiten Feldsteuerungselements (18) ein Polymer und einen in das Polymer eingebetteten und Mikrovaristoren und gegebenenfalls elektrisch leitfähige Partikel enthaltenden Füllstoff aufweist.

12. Hüllkörper nach einem der Ansprüche 10 oder 11, **dadurch gekennzeichnet, dass** die Mikrovaristoren des ersten (3) und/oder des zweiten Feldsteuerungselements (18) durch Sintern metalloxiddotierter Zinkoxidpartikel gebildet sind.

13. Hüllkörper nach einem der Ansprüche 11 oder 12, **dadurch gekennzeichnet, dass** das erste und das zweite Feldsteuerungselement durch Wahl unterschiedlicher Füllstoffe, Füllstoffkonzentrationen und/oder Sinterbedingungen hervorgerufene unterschiedliche elektrische Eigenschaften aufweisen.

14. Hüllkörper nach einem der Ansprüche 10 bis 13, **dadurch gekennzeichnet, dass** zwischen dem ersten und dem zweiten Feldsteuerungselement (3, 18) eine Schicht (20) aus elektrisch leitfähigem Material aufgebracht ist.

15. Hüllkörper nach Anspruch 14, **dadurch gekennzeichnet, dass** die Leitschicht (20) in elektrisch isolierender Weise in die Isolationsschicht (19) eingebettet ist.

16. Kabelelement, insbesondere Kabelendverschluss (5) oder Kabelmuffe, mit einem Kabelabschnitt (6), welcher einen auf Hochspannungspotential führbaren Kabelleiter (7), eine elektrisch leitfähige Kabelschirmung (8) und eine zwischen Kabelleiter (7) und Kabelschirmung (8) angeordnete Kabelisolation (9) umfasst, und mit einem auf dem Kabelabschnitt (6) angebrachten Hüllkörper (1) nach einem der vorhergehenden Ansprüche, **dadurch gekennzeichnet, dass** das erste Feldsteuerungselement (3) in einem eine Absetzkante (12) einer Beschichtung (11) der Kabelschimung (8) und einen ungeschirmten Bereich (14) der Kabelisolierung (9) umschliessenden ersten Abschnitt (15) eine veränderte Anzahl an Mikrovaristoren pro Flächeneinheit aufweist als in einem sich daran anschliessenden und einen geschirmten Bereich (16) der Kabelisolierung (9) umfassenden zweiten Abschnitt (17).

17. Kabelelement nach Anspruch 16, **dadurch gekennzeichnet, dass** das erste Feldsteuerungselement (3) die Kabelschirmung (8) und den Kabelleiter (7) miteinander verbindet und eine durchgehende Verbindung darstellt, so dass Erdpotential und Hochspannungspotential verbunden sind.

18. Kabelelement nach Anspruch 17, **dadurch gekennzeichnet, dass** das erste Feldsteuerungselement (3) die Beschichtung (11), die Kabelschirmung (8) und einen auf dem Potential des Kabelleiters (7) befindlichen Kabelschuh (13) miteinander verbindet.

19. Kabelelement nach Anspruch 16, **dadurch gekennzeichnet, dass** das erste Feldsteuerungselement (3) und ein gegenenfalls vorgesehenes, das erste Feldsteuerungselement (3) umgebendes zweites Feldsteuerungselement (18) in axialer Richtung über die Absetzkante (12) geführt und lediglich mit der Kabelschirmung (8) verbunden sind.

20. Kabelelement nach Anspruch 19, **dadurch gekennzeichnet, dass** in Abänderung von Anspruch 19 das gegebenenfalls vorgesehene zweite Feldsteuerungselement (18) auf floatendem Potential gehalten ist.

21. Kabelelement nach einem der Ansprüche 19 oder 20, **dadurch gekennzeichnet, dass** zwischen dem ersten (3) und dem gegebenenfalls vorgesehenen zweiten Feldsteuerungselement (18) eine elektrisch leitende Schicht (20) angeordnet ist, welche entweder in elektrisch isolierender Weise in eine die beiden Feldsteuerungselemente (3, 18) voneinander trennende Isolationsschicht (19) eingebettet oder mit dem zweiten Feldsteuerungselement (18) elektrisch leitend verbunden ist.

22. Kabelelement nach einem der Ansprüche 16 bis 21, **dadurch, gekennzeichnet, dass** auf der Innenfläche des Hohlkörperabschnitts des ersten Feldsteuerungselements (3) eine ringförmig ausgebildete Schicht (21) aus elektrisch leitfähigem Material aufgebracht ist, welche sich in Richtung der Achse (2) über die Absetzkante (12) erstreckt.

## Claims

1. Body (1) for casing the end, a branch or a connecting point of a high-voltage cable having a first element (3), which has a nonlinear current/voltage characteristic, for the purpose of controlling the electrical field in the casing region, which field control element (3) contains a polymer and a filler, which is embedded in the polymer and contains microvaristors, and at least one hollow body section, which extends along an axis (2) and is of two-dimensional design, having an axially symmetrical inner face, which can be guided on an outer face of the cable owing to deformation of the casing body (1), **characterized in that**, before the casing body (1) is fitted to the cable, the inner face of the hollow body section is designed to differ from the outer face of the cable, to be precise such that field control is achieved in the casing region by altering the number of microvaristors per unit area, as a result of the extension and/or shrinkage of the hollow body section after the deformation during fitting.

2. Casing body according to Claim 1, **characterized in that** an inner diameter (D(r)) determining the dimensions of the inner face changes continuously, preferably monotonically, in particular linearly, along the axis (2).

3. Casing body according to Claim 2, **characterized in that** the ratio of the minimum inner diameter (Dₘᵢₙ) to the maximum inner diameter (Dₘₐₓ) of the inner face is from 0.2- to 1.0-fold.

4. Casing body according to one of Claims 1 to 3, **characterized in that**, in addition to the inner diameter of the inner face, the wall thickness of the hollow body section also changes along the axis (2).

5. Casing body according to one of Claims 1 to 4, **characterized in that**, in addition to the microvaristors, electrically conductive particles are also embedded in the polymer as the filler.

6. Casing body according to Claim 5, **characterized in that** the electrically conductive particles are applied to the microvaristors.

7. Casing body according to either of Claims 5 and 6, **characterized in that** the electrically conductive particles provided in the filler make up approximately 0.05 to approximately 5 volume per cent of the filler.

8. Casing body according to one of Claims 1 to 7, **characterized in that** an annular layer (21) made from an electrically conductive material is applied to or integrated on the inner face of the hollow body section of the first field control element (3), said layer (21) extending in the direction of the axis (2) only over a subsection of the first field control element (3).

9. Casing body according to one of Claims 1 to 8, **characterized in that** the first field control element (3) is moulded into an inner face of an elastically deformable supporting body (4) made from an insulating material.

10. Casing body according to Claim 9, **characterized in that** at least one second field control element (18), which surrounds the first field control element (3) and is separated from said first field control element (3) by an electrically insulating layer (19), is moulded into the supporting body (4).

11. Casing body according to Claim 10, **characterized in that** the material of the second field control element (18) has a polymer and a filler, which is embedded in the polymer and contains microvaristors and possibly electrically conductive particles.

12. Casing body according to either of Claims 10 and 11, **characterized in that** the microvaristors of the first field control element (3) and/or of the second field control element (18) are formed by sintering zinc oxide particles doped with metal oxide.

13. Casing body according to either of Claims 11 and 12, **characterized in that** the first field control element and the second field control element have different electrical properties owing to the selection of different fillers, filler concentrations and/or sintering conditions.

14. Casing body according to one of Claims 10 to 13, **characterized in that** a layer (20) made from an electrically conductive material is applied between the first field control element (3) and the second field control element (18).

15. Casing body according to Claim 14, **characterized in that** the conductive layer (20) is embedded in the insulating layer (19) in an electrically insulating manner.

16. Cable element, in particular cable end seal (5) or cable sleeve, having a cable section (6) which comprises a cable conductor (7), which can be connected to a high-voltage potential, an electrically conductive cable shielding (8) and cable insulation (9) arranged between the cable conductor (7) and the cable shielding (8), and having a casing body (1), which is fitted to the cable section (6), according to one of the preceding claims, **characterized in that** the first field control element (3) has a different number of microvaristors per unit area in a first section (15), which surrounds a step edge (12) of a coating (11) of the cable shielding (8) and an unshielded region (14) of the cable insulation (9), than in a second section (17), which is adjacent thereto and surrounds a shielded region (16) of the cable insulation (9).

17. Cable element according to Claim 16, **characterized in that** the first field control element (3) connects the cable shielding (8) and the cable conductor (7) to one another and represents a continuous connection such that the earth potential and high-voltage potential are connected.

18. Cable element according to Claim 17, **characterized in that** the first field control element (3) connects the coating (11), the cable shielding (8) and a cable lug (13), at the potential of the cable conductor (7), to one another.

19. Cable element according to Claim 16, **characterized in that** the first field control element (3) and a second field control element (18), which may be provided and surrounds the first field control element (3), are guided in the axial direction over the step edge (12) and are only connected to the cable shielding (8) .

20. Cable element according to Claim 19, **characterized in that**, in a modification of Claim 19, the second field control element (18), which may be provided, is held at the floating potential.

21. Cable element according to either of Claims 19 and 20, **characterized in that** an electrically conductive layer (20) is arranged between the first field control element (3) and the second field control element (18), which may be provided, said electrically conductive layer (20) either being embedded in an electrically insulating manner in an insulating layer (19) which separates the two field control elements (3, 18) from one another or being electrically conductively connected to the second field control element (18).

22. Cable element according to one of Claims 16 to 21, **characterized in that** an annular layer (21) made from an electrically conductive material is applied to the inner face of the hollow body section of the first field control element (3), said layer (21) extending in the direction of the axis (2) over the step edge (12).

## Revendications

1. Corps (1) pour gainer l'extrémité, une dérivation ou un point de connexion d'un câble à haute tension avec un premier élément (3) présentant une courbe courant/tension non linéaire, destiné à commander le champ électrique dans la zone gainée, lequel élément de commande du champ (3) comprenant un polymère et une masse de remplissage intégrée dans le polymère et contenant des microvaristances et au moins une section de corps creux s'étendant le long d'un axe (2) et réalisée sous forme plane avec une surface intérieure à symétrie axiale pouvant être guidée sur une surface extérieure du câble en déformant le corps de gainage (1), **caractérisé en ce qu'**avant d'appliquer le corps de gainage (1) sur le câble, la surface intérieure de la section de corps creux présente une configuration différente de la surface extérieure du câble, et ce de telle sorte que la commande du champ dans la zone gainée est obtenue en modifiant le nombre de microvaristances par unité de surface suite à l'extension et/ou la rétraction de la section de corps creux après la déformation lors de l'application.

2. Corps de gainage selon la revendication 1, **caractérisé en ce qu'**un diamètre intérieur (D(r)) qui détermine la dimension de la surface intérieure varie continuellement le long de l'axe (2), de préférence de manière monotone, notamment linéaire.

3. Corps de gainage selon la revendication 2, **caractérisé en ce que** le rapport entre le diamètre intérieur minimum (Dₘᵢₙ) et le diamètre intérieur maximum (Dₘₐₓ) de la surface inférieure est compris entre 0,2 et 1,0.

4. Corps de gainage selon l'une des revendications 1 à 3, **caractérisé en ce qu'**en plus du diamètre intérieur de la surface intérieure, l'épaisseur de paroi de la section de corps creux varie elle aussi le long de l'axe (2).

5. Corps de gainage selon l'une des revendications 1 à 4, **caractérisé en ce qu'**en plus des microvaristances, des particules électriquement conductrices sont également intégrées dans le polymère en tant que masse de remplissage.

6. Corps de gainage selon la revendication 5, **caractérisé en ce que** les particules électriquement conductrices sont appliquées sur les microvaristances.

7. Corps de gainage selon l'une des revendications 5 ou 6, **caractérisé en ce que** les particules électriquement conductrices prévues dans la masse de remplissage représentent 0,05 à environ 5 pourcent en volume de la masse de remplissage.

8. Corps de gainage selon l'une des revendications 1 à 7, **caractérisé en ce qu'**une couche (21) de forme annulaire en matériau électriquement conducteur est appliquée sur ou intégrée dans la surface intérieure de la section de corps creux du premier élément de commande de champ (3), laquelle s'étend dans le sens de l'axe (2) uniquement sur une section partielle du premier élément de commande de champ (3).

9. Corps de gainage selon l'une des revendications 1 à 8, **caractérisé en ce que** le premier élément de commande de champ (3) est façonné dans une surface intérieure d'un corps porteur (4) déformable par effet élastique en matériau isolant.

10. Corps de gainage selon la revendication 9, **caractérisé en ce que** dans le corps porteur (4) est façonné au moins un deuxième élément de commande de champ (18) qui entoure le premier élément de commande de champ (3) et qui est séparé de celui-ci par une couche (19) électriquement isolante.

11. Corps de gainage selon la revendication 10, **caractérisé en ce que** le matériau du deuxième élément de commande de champ (18) présente un polymère et une masse de remplissage intégrée dans le polymère et contenant des microvaristances et éventuellement des particules électriquement conductrices.

12. Corps de gainage selon l'une des revendications 10 ou 11, **caractérisé en ce que** les microvaristances du premier (3) et/ou du deuxième élément de commande de champ (18) sont formées par frittage de particules d'oxyde de zinc dotées d'oxyde métallique.

13. Corps de gainage selon l'une des revendications 11 ou 12, **caractérisé en ce que** le premier et le deuxième élément de commande de champ présentent des propriétés électriques différentes produites en choisissant des masses de remplissage, des concentrations de masse de remplissage et/ou des conditions de frittage différentes.

14. Corps de gainage selon l'une des revendications 10 à 13, **caractérisé en ce qu'**une couche (20) de matériau électriquement conducteur est appliquée entre le premier et le deuxième élément de commande de champ (3, 18).

15. Corps de gainage selon la revendication 14, **caractérisé en ce que** la couche conductrice (20) est intégrée dans la couche isolante (19) de manière à être isolée électriquement.

16. Élément pour câble, notamment cosse pour câble (5) ou manchon de câble, comprenant une section de câble (6) qui comprend un conducteur de câble (7) pouvant être amené à un potentiel de haute tension, un blindage de câble (8) électriquement conducteur et un isolant de câble (9) disposé entre le conducteur de câble (7) et le blindage de câble (8), et comprenant un corps de gainage (1) selon l'une des revendications précédentes appliqué sur la section de câble (6), **caractérisé en ce que** le premier élément de commande de champ (3) présente, dans une première section (15) englobant un bord décalé (12) d'un revêtement (11) du blindage du câble (8) et une zone non blindée (14) de l'isolant du câble (9), un nombre de microvaristances par unité de surface modifié par rapport à celui d'une deuxième section (17) venant se rattacher à celle-ci et englobant une zone blindée (16) de l'isolant du câble (9).

17. Élément pour câble selon la revendication 16, **caractérisé en ce que** le premier élément de commande de champ (3) relie entre eux le blindage de câble (8) et le conducteur de câble (7) et représente une liaison continue de manière à ce que le potentiel de la terre et le potentiel de la haute tension soient reliés.

18. Élément pour câble selon la revendication 17, **caractérisé en ce que** le premier élément de commande de champ (3) relie ensemble le revêtement (11), le blindage de câble (8) et une cosse de câble (13) qui se trouve au potentiel du conducteur de câble (7).

19. Élément pour câble selon la revendication 16, **caractérisé en ce que** le premier élément de commande de champ (3) et un deuxième élément de commande de champ (18) éventuellement prévu et entourant le premier élément de commande de champ (3) sont amenés dans le sens axial sur le bord décalé (12) et sont uniquement reliés avec le blindage du câble (8).

20. Élément pour câble selon la revendication 19, **caractérisé en ce que**, en variante de la revendication 19, le deuxième élément de commande de champ (18) éventuellement prévu est maintenu à un potentiel flottant.

21. Élément pour câble selon l'une des revendications 19 ou 20, **caractérisé en ce qu'**entre le premier (3) et le deuxième élément de commande de champ (18) éventuellement prévu est disposée une couche (20) électriquement conductrice qui est soit intégrée de manière électriquement isolante dans une couche isolante (19) qui sépare l'un de l'autre les deux éléments de commande de champ (3, 18), soit reliée de façon électriquement conductrice avec le deuxième élément de commande de champ (18).

22. Élément pour câble selon l'une des revendications 16 à 21, **caractérisé en ce qu'**une couche (21) de forme annulaire en matériau électriquement conducteur est appliquée sur la surface intérieure de la section de corps creux du premier élément de commande de champ (3), laquelle s'étend dans le sens de l'axe (2) sur le bord décalé (12).
